(19) Europäisches Patentamt

European Patent Office

Office européen des brevets

(11) **EP 0 980 871 A2**

(12) **EUROPÄISCHE PATENTANMELDUNG**

(43) Veröffentlichungstag:
23.02.2000  Patentblatt 2000/08

(51) Int. Cl.[7]: **C07F 7/18**

(21) Anmeldenummer: **99114730.7**

(22) Anmeldetag: **26.07.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **14.08.1998 DE 19837010**

(71) Anmelder:
**Degussa-Hüls Aktiengesellschaft
60287 Frankfurt am Main (DE)**

(72) Erfinder:
• **Horn, Michael, Dr.
79618 Rheinfelden (DE)**
• **Frings, Albert-Johannes, Dr.
79618 Rheinfelden (DE)**
• **Jenkner, Peter, Dr.
79618 Rheinfelden (DE)**
• **Monkiewicz, Jaroslaw, Dr.
79618 Rheinfelden (DE)**
• **Standke, Burkhard, Dr.
79540 Lörrach (DE)**
• **Trautvetter, Bertram
79618 Rheinfelden (DE)**

(54) **Verfahren zur Herstellung von Acetoxysilanen**

(57)     Die vorliegende Erfindung betrifft ein Verfahren zur Herstellung von Acetoxysilanen durch Umsetzung von Chlorsilanen mit Essigsäure und Essigsäureanhydrid in Gegenwart eines Katalysators, wobei man in einer Reaktionsstufe 1 das Chlorsilan mit Essigsäure umsetzt, den entstandenen Anteil an Chlorwasserstoff abführt, das so erhaltene Reaktionsgemisch in einer Reaktionsstufe 2 mit Essigsäureanhydrid umsetzt und das resultierende Produktgemisch aufarbeitet, und das dadurch gekennzeichnet ist, dass man Acetylchlorid als Reaktionsmedium einsetzt.

Ferner betrifft die vorliegende Erfindung insbesondere auch die Herstellung von Di-tert.-butoxydiacetoxysilan.

EP 0 980 871 A2

Printed by Xerox (UK) Business Services
2.16.7/3.6

**Beschreibung**

Die Erfindung betrifft ein Verfahren zur Herstellung von Acetoxysilanen durch Umsetzung von Chlorsilanen mit Essigsäure und Essigsäureanhydrid in Gegenwart eines Katalysators, wobei man in einer Reaktionsstufe 1 das Chlorsilan mit Essigsäure umsetzt, den entstandenen Anteil an Chlorwasserstoff abführt, das so erhaltene Reaktionsgemisch aus der Reaktionsstufe 1 in einer Reaktionsstufe 2 mit Essigsäureanhydrid umsetzt und das resultierende Produktgemisch aufarbeitet. Die vorliegende Erfindung betrifft auch die Herstellung von Di-tert.-butoxydiacetoxysilan.

Acetoxysilane haben vielseitige Anwendung in der chemischen Industrie gefunden. Sie eignen sich z. B. als vernetzende Siliciumverbindungen bei der Herstellung von Kunststoffmassen, die unter Ausschluss von Wasser lagerfähig und bei Zutritt von Feuchtigkeit bereits bei Raumtemperatur härtbar sind. Beispiele dafür sind Verbindungen wie Methyl-, Ethyl- und Propyltriacetoxysilan.

Es ist bekannt, dass man Organoalkoxysilane durch Umsetzung der entsprechenden Chlorsilane mit wasserfreiem Natriumacetat, mit Essigsäureanhydrid oder Essigsäure herstellen kann. Auch kann man dabei die Ausbeute steigern, wenn man in Gegenwart einer tertiären Base arbeitet. Ferner kann man Tetraacetoxysilan aus Siliciumtetrachlorid und Essigsäure auch in einem niedrigsiedenden organischen Lösemittel, z. B. Ether, gewinnen [W. Noll, Chemie und Technologie der Silicone, VCH Weinheim, Seiten 78 und 79 (1960); Inorganic Syntheses Vol. IV, Seiten 45 bis 47 (1953)].

Der Publikation US 2 566 347 ist zu entnehmen, wie Carbonoyloxysilane unter kontrollierten Bedingungen aus einem Halogensilan und einer organischen Carbonsäure in flüssigen organischen Lösemitteln, wie Pentan, Ethylbromid, Isopropylether, Benzol sowie Tetrachlorkohlenstoff, herzustellen sind. Tetraacetoxysilan kann man durch Umsetzung mit einer entsprechenden Menge eines Alkohols beispielsweise in ein Dialkoxydiacetoxysilan überführen.

FR-PS 1 003 073 offenbart die diskontinuierliche und gleichzeitige Herstellung von Carbonoyloxysilanen und Carbonsäurechloriden durch Umsetzung von Organochlorsilanen mit Monocarbonsäureanhydriden.

EP 0 845 469 A2 lehrt ein Verfahren zur Herstellung von Organocarbonoyloxysilanen durch eine katalysierte Umsetzung von Organochlorsilanen mit einer Carbonsäure und einem Carbonsäureanhydrid in zwei Reaktionsschritten. Es ist festzustellen, dass bei Abwesenheit eines Lösemittels vermehrt Nebenreaktionen auftreten können, zum Beispiel die thermische Zersetzung des gebildeten Produkts oder eine Reaktion von HCl mit Essigsäure, was zu einer deutlichen Ausbeuteschmälerung führt.

Eine Ausführungsform des besagten Verfahrens erfolgt unter Einsatz von Hexan als Lösemittel.

Im ersten Reaktionsschritt ist demnach vorzusehen, dass man zu einer vorgelegten Mischung aus Alkylchlorsilan und Hexan in der Siedehitze Essigsäure dosiert. Dabei wird Chlorwasserstoff ausgetrieben.

Im zweiten Schritt gibt man das erhaltene Reaktionsgemisch in überschüssiges Essigsäureanhydrid und trennt dabei Acetylchlorid und Hexan destillativ ab. Nach dem Entfernen des Anhydridüberschusses bleibt das rohe Acetoxysilan zurück.

Das erhaltene Acetylchlorid/Hexan-Gemisch kann mit der äquivalenten Menge Wasser zu einem Essigsäure/Hexan-Gemisch hydrolysiert, anschließend destillativ getrennt und nachfolgend der Synthese wieder zugeführt werden.

Als Löse- bzw. Verdünnungsmittel offenbart EP 0 845 469 A2 ferner Pentan, Benzol, Toluol sowie Trichlorethylen.

Zu diesem an sich vorteilhaften Verfahren ist jedoch anzumerken:

Um kein freies Wasser in das System einzuschleppen, muss bei der Acetylchlorid/Hexan-Hydrolyse sehr exakt gearbeitet werden. Dieser Vorgang kommt einer Titration gleich, die im technischen Maßstab aufwendig und oft fehlerhaft ist. Denn Wasser im System erzeugt im Kontakt mit Silanen Siloxane, wodurch die Qualität des Produkts sowie die Ausbeute gemindert werden.

Nach der Umsetzung mit Wasser muss das erhaltene Essigsäure/Hexan-Gemisch auseinander destilliert werden. Diese Destillation ist ebenfalls aufwendig und erfordert u. a. wegen des hohen Schmelzpunkts von Essigsäure ein kompliziertes, in der Regel störanfälliges Kondensationssystem.

In der ersten Reaktionsstufe und bei der Acetylchlorid/Hexan-Aufarbeitung wird Chlorwasserstoff aus einer hexanhaltigen Lösung heraus erzeugt. Dies ist mit dem Problem behaftet, dass beträchtliche Mengen Hexan in das Abgasbehandlungssystem gelangen können, wo es beispielsweise durch Inertgase ausgetragen wird und so in die Atmosphäre gelangen kann.

Der vorliegenden Erfindung lag daher die Aufgabe zugrunde, ein Verfahren zur Herstellung von Acetoxysilanen bereitzustellen, das es ermöglicht, zuvor dargelegte Probleme im Wesentlichen zu vermeiden.

Die gestellte Aufgabe wird erfindungsgemäß entsprechend den Angaben der Patentansprüche gelöst.

Überraschenderweise wurde nun gefunden, dass oben genannte Probleme in vorteilhafter Weise zu vermeiden sind, wenn man ein Verfahren, wie es EP 0 845 469 A2 offenbart, zugrundelegt und dabei als multifunktionelles Reaktionsmedium in einfacher und wirtschaftlicher Weise Acetylchlorid einsetzt.

Das als Reaktionsmedium eingesetzte Acetylchlorid kann somit bei der vorliegenden Erfindung gleichzeitig verschiedene Funktionen in vorteilhafter Weise erfüllen:

Acetylchlorid ist in Form seiner Hydrolyseprodukte ein sehr gut wasserlösliches Solvens. Das Abgas der Reaktion besteht dann im Wesentlichen aus wasserlöslichen Bestandteilen und kann in einfacher und vorteilhafter Weise in einem wassergespeisten Wäscher niedergeschlagen werden (Funktion als Lösemittel).

Wegen seines niedrigen Siedepunkts begrenzt es die Reaktionstemperatur insbesondere in der Reaktionsstufe 1 und verhindert so die thermische Zersetzung des gebildeten Acetoxysilans bzw. seiner möglichen, noch chlorhaltigen Vorstufen (Funktion als Temperaturbegrenzer).

Darüber hinaus kann Acetylchlorid als Schleppmittel für den Chlorwasserstoff bei der Veresterungsreaktion dienen. Dadurch bleibt die Chlorwasserstoffkonzentration in der Reaktionsmischung in geeigneter Weise niedrig, was der Nebenreaktion von HCl und Essigsäure zu Acetylchlorid und Wasser entgegenwirkt (Funktion als Schleppmittel).

Acetylchlorid löst Chlorwasserstoff besonders in der Wärme schlecht. Dadurch kann die HCl-Konzentration in der Reaktionsmischung ebenfalls niedrig gehalten werden (Funktion als Verdünnungsmittel).

In der Reaktionsstufe 2 fällt statt eines Acetylchlorid/Hexan-Gemisches lediglich Acetylchlorid an.

Durch eine partielle Umsetzung von Acetylchlorid mit Wasser kann ein Wasserüberschuss, der in der Folge die Hydrolyse des Zielprodukts bzw. seiner Vorstufen zur Folge hätte, sicher vermieden werden (Funktion als Wasserfänger).

In das nach der Hydrolyse vorliegende Acetylchlorid/Essigsäure-Gemisch kann vorteilhafterweise in der Reaktionsstufe 1 des Folgeansatzes das Chlorsilan direkt eindosiert werden (Funktion als Eduktquelle).

Die Weiterreaktion von Acetylchlorid mit Essigsäure zu Essigsäureanhydrid ist im Allgemeinen unter den dann vorherrschenden Bedingungen ausgesprochen langsam und kann deshalb unberücksichtigt bleiben.

Gegenstand der vorliegenden Erfindung ist daher ein Verfahren zur Herstellung von Acetoxysilanen durch Umsetzung von Chlorsilanen mit Essigsäure und Essigsäureanhydrid in Gegenwart eines Katalysators, wobei man in einer Reaktionsstufe 1 das Chlorsilan mit Essigsäure umsetzt, den entstandenen Anteil an Chlorwasserstoff abführt, das so erhaltene Reaktionsgemisch in einer Reaktionsstufe 2 mit Essigsäureanhydrid umsetzt und das resultierende Produktgemisch aufarbeitet, und das dadurch gekennzeichnet ist, dass man Acetylchlorid als Reaktionsmedium einsetzt.

Beim erfindungsgemäßen Verfahren setzt man in der Reaktionsstufe 1 vorzugsweise mindestens ein Chlorsilan der allgemeinen Formel $R_nSiCl_{(4-n)}$ (I) ein, wobei R für eine lineare, verzweigte oder cyclische Alkylgruppe mit 1 bis 6 Kohlenstoffatomen oder eine Phenyl- oder Benzyl-Gruppe steht und n gleich 0, 1, 2 oder 3 ist.

Geeigneterweise kann man in der Reaktionsstufe 1 auch zwei verschiedene oder mehr als zwei Chlorsilane der allgemeinen Formel (I) einsetzen; dabei kann man die Chlorsilankomponenten als Einzelkomponenten nacheinander oder in Form ihrer Mischung einsetzen.

Sofern beim erfindungsgemäßen Verfahren mehrere Chlorsilane als Einzelkomponenten eingesetzt werden, führt man die Reihenfolge der Zugabe der Chlorsilane bevorzugt nach steigender Reaktivität der jeweiligen Chlorsilane aus.

Beim erfindungsgemäßen Verfahren setzt man als Chlorsilan besonders vorzugsweise solche der allgemeinen Formel (I), insbesondere - aber nicht ausschließlich - Tetrachlorsilan, Vinyl-, Methyl-, Ethyl-, Propyl- oder Phenyltrichlorsilan, Dimethyldichlorsilan sowie 2-Chlorethylmethyldichlorsilan, ein.

In der Regel werden beim erfindungsgemäßen Verfahren die Umsetzungen in Gegenwart eines Katalysators durchgeführt. So setzt man beim erfindungsgemäßen Verfahren vorzugsweise ein organisches Säureamid, besonders vorzugsweise N,N-Dimethylformamid, als Katalysator ein.

Den Gehalt an Katalysator stellt man geeigneterweise in der Reaktionsstufe 1 auf 0,001 bis 0,2 Gew.-%, insbesondere auf 0,002 bis 0,005 Gew.-%, bezogen auf die eingesetzte Menge an Chlorsilan, ein.

Ferner legt man bei der Durchführung des erfindungsgemäßen Verfahrens in der Reaktionsstufe 1 vorzugsweise eine Mischung aus Essigsäure und Acetylchlorid vor und dosiert die Chlorsilankomponente zu.

Bevorzugt führt man die Umsetzung in der Reaktionsstufe 1 bei der Siedetemperatur der jeweils vorliegenden Reaktionsmischung sowie geeigneterweise bei einem Druck von 900 bis 1100 mbar abs. durch.

Auch setzt man in der Reaktionsstufe 1 des erfindungsgemäßen Verfahrens vorzugsweise Essigsäure in der Menge ein, die erforderlich ist, um im Mittel 50 Mol-% des im Chlorsilan gebundenen Chlors umzusetzen. In der Regel werden dabei entstehende Anteile Chlorwasserstoff über die Gasphase abgeführt. Hierbei dient Acetylchlorid in geeigneter und wirtschaftlicher Weise als Schleppmittel.

In der Reaktionsstufe 2 des erfindungsgemäßen Verfahrens legt man vorzugsweise Essigsäureanhydrid vor und dosiert nun das Reaktionsgemisch aus Reaktionsstufe 1, wie es nach der bereits oben beschriebenen Umsetzung anfällt, zu und destilliert dabei sich bildendes Acetylchlorid ab, anschließend kann auch gegebenenfalls überschüssiges Essigsäureanhydrid abdestilliert werden.

Die Reaktionsstufen 1 sowie 2 des erfindungsgemäßen Verfahrens werden üblicherweise bei Temperaturen im Bereich von 40 bis 120 °C betrieben, wobei man die Reaktionsstufe 1 vorzugsweise bei 50 bis 65 °C sowie die Reaktionsstufe 2 vorzugsweise bei 50 bis 100 °C betreibt.

Ferner führt man alle Umsetzungen des erfindungsgemäßen Verfahrens geeigneterweise unter Inertgas sowie insbesondere unter Ausschluss von Luftfeuchtigkeit durch.

Auch führt man die Umsetzung in der Reaktionsstufe 2 bevorzugt bei der Siedetemperatur der jeweils vorliegenden Reaktionsmischung durch.

In der Reaktionsstufe 2 des erfindungsgemäßen Verfahrens führt man die Umsetzung vorzugsweise bei einem Druck im Bereich zwischen 1 bar abs. bis 1 mbar abs. durch, wobei man geeigneterweise bei Atmosphärendruck beginnt und bei fortschreitender Reaktion den Druck absenkt.

Ferner setzt man in der Reaktionsstufe 2 Essigsäureanhydrid vorzugsweise mindestens in der Menge ein, die erforderlich ist, um das im Acetoxychlorsilan des Reaktionsgemischs aus der Reaktionsstufe 1 gebundene Chlor in Acetylchlorid zu überführen.

Insbesondere setzt man dabei Essigsäureanhydrid mit einem Überschuss bis 300 Gew.-%, besonders vorzugsweise von 0,1 bis 100 Gew.-%, ganz besonders vorzugsweise von 50 bis 100 Gew.-%, bezogen auf die eingesetzte Menge an Chlorsilan, ein.

Das bei der Umsetzung in Reaktionsstufe 2 erhaltene Produktgemisch wird geeigneterweise destillativ aufgearbeitet, und über Kopf wird Acetylchlorid und gegebenenfalls überschüssiges Essigsäureanhydrid abgeführt; zurück bleibt das gewünschte Produkt. Das so erhaltene Produkt fällt, bezogen auf das eingesetzte Chlorsilan, im Allgemeinen quantitativ an. Es enthält in der Regel ca. 2 % oligomere Siloxane und weniger als 10 Gew.-ppm hydrolysierbares Chlorid. Falls erforderlich, kann es in an sich bekannter Weise destillativ nachgereinigt werden.

Geeigneterweise gibt man nun der in Reaktionsstufe 2 erhaltenen und destillativ abgetrennten Acetylchloridfraktion Wasser zu und setzt zu einer Mischung aus Acetylchlorid und Essigsäure um, wobei man vorzugsweise die Wassermenge so wählt, dass Essigsäure in einer Menge erzeugt wird, welche ihrerseits erforderlich ist, um im Mittel 50 Mol-% des im Chlorsilan gebundenen Chlors in Reaktionsstufe 1 umzusetzen.

Bevorzugt setzt man die so erhaltene Mischung aus Acetylchlorid und Essigsäure wieder in Reaktionsstufe 1 ein. Verluste an Acetylchlorid können vorteilhaft durch geringfügige Variation der Wassermenge ausgeglichen werden. In der Regel schließt sich hier der Kreis des vorliegenden Verfahrens.

So werden nach dem erfindungsgemäßen Verfahren bevorzugt folgende Verbindungen hergestellt: Tetraacetoxysilan, Vinyltriacetoxysilan, Ethyltriacetoxysilan, Methyltriacetoxysilan, Propyltriacetoxysilan, Dimethyldiacetoxysilan, Phenyltriacetoxysilan oder deren Gemische, beispielsweise aus Methyl- und Ethyltriacetoxysilan.

Das erfindungsgemäße Verfahren kann im Allgemeinen wie folgt ausgeführt werden:

Umsetzung von einem Äquivalent (1 eq) Trichlorsilan mit 1,5 eq Essigsäure in einer ersten Stufe und weiter mit 1,5 eq plus Überschuss Essigsäureanhydrid in einer zweiten Stufe. Hierbei werden zusätzlich zu dem als Reaktionsmedium eingesetzten Acetylchlorid weitere 1,5 eq Acetylchlorid frei, die zusammen mit 1,5 eq Wasser wieder die 1,5 eq Essigsäure für den nächsten Ansatz liefern können. In der Regel erhält man so 1 eq Acetoxysilan. Beispielsweise gemäß

$$RSiCl_3 + 1,5 \ AcOH \rightarrow RSiCl_{1,5}(OAc)_{1,5} + 1,5 \ HCl$$

$$RSiCl_{1,5}(OAc)_{1,5} + 1,5 \ Ac_2O \rightarrow RSi(OAc)_3 + 1,5 \ AcCl$$

$$\underline{1,5 \ AcCl + 1,5 \ H_2O \rightarrow 1,5 \ AcOH + 1,5 \ HCl}$$

$$RSiCl_3 + 1,5 \ Ac_2O + 1,5 \ H_2O \rightarrow RSi(OAc)_3 + 3 \ HCl$$

Praktisch können über den Chlorwasserstoff Verluste an Acetylchlorid gemäß seinem Partialdruck auftreten. Man kann dies dadurch ausgleichen, indem man geeigneterweise mit etwas weniger als 1,5 eq Wasser hydrolysiert, dadurch auch etwas weniger als 1,5 eq Essigsäure erhält, was im weiteren Verlauf zu einem erhöhten Essigsäureanhydridverbrauch und somit zu einem höheren Acetylchloridanfall führt. Womit die Verluste in vorteilhafter Weise wieder ausgeglichen wären.

Nach dem erfindungsgemäßen Verfahren kann man auch das unter den oben genannten Reaktionsbedingungen feste und im Reaktionsmedium schwer lösliche Tetraacetoxysilan herstellen. Hierbei sollte jedoch für die Durchführung der Verfahrensschritte eine für die Feststoffhandhabung geeignete Apparatur, insbesondere um notwendige Filtrationen durchführen zu können, verwendet werden.

Das erfindungsgemäße Verfahren kann man in überraschender, einfacher und wirtschaftlicher und somit vorteilhafter Weise auch mit der Herstellung von Alkoxyacetoxysilanen kombinieren.

Strebt man beispielsweise an, Di-tert.-butoxydiacetoxysilan aus Tetracetoxysilan herzustellen, so kann man geeigneterweise das nach dem erfindungsgemäßen Verfahren erhaltene Tetraacetoxysilan sofort im Anschluss an die Isolierung des Feststoffs mit der dafür vorzusehenden Menge an Alkohol, d. h. tert.-Butanol, in an sich bekannter Weise umsetzen und die dabei freigesetzte Menge Essigsäure abdestillieren.

Geeigneterweise setzt man beim erfindungsgemäßen Verfahren die im Anschluss an Reaktionsstufe 2 aus der Umsetzung des Tetraacetoxysilans mit tert.-Butanol erhaltene Essigsäure zumindest anteilig in einfacher, wirtschaftlicher und somit vorteilhafter Weise in Reaktionsstufe 1 ein.

Bevorzugt setzt man in der Reaktionsstufe 1 nunmehr 75 % des Si-gebundenen Chlors mit Essigsäure um, sodass man in vorteilhafter Weise neben Chlorwasserstoff im Wesentlichen kein weiteres Beiprodukt erzeugt:

$$SiCl_4 + 3 \ AcOH \rightarrow SiCl(OAc)_3 + 3 \ HCl$$

$$SiCl(OAc)_3 + Ac_2O \rightarrow Si(OAc)_4 + AcCl$$

$$AcCl + H_2O \rightarrow AcOH + HCl$$

$$\underline{Si(OAc)_4 + 2\,^tBuOH \rightarrow Si(O^tBu)_2(OAc)_2 + 2\,AcOH}$$

$$SiCl_4 + Ac_2O + 2\,^tBuOH + H_2O \rightarrow Si(O^tBu)_2 + 4\,HCl$$

Die erfindungsgemäße Fahrweise mit Acetylchlorid als Reaktionsmedium, wobei es geeigneterweise gleichzeitig als Lösemittel, Verdünnungsmittel, Schleppmittel, Wasserfänger, Temperaturbegrenzer sowie Eduktquelle fungiert, ermöglicht somit ein besonders wirtschaftliches und umweltorientiertes Betreiben des vorliegenden Verfahrens zur Herstellung von Acetoxysilanen.

Die Erfindung wird durch die nachfolgenden Beispiele näher erläutert:

**Beispiel 1**

**Herstellung von Propyltriacetoxysilan**

Apparatur A:

Ein doppelwandiger, ölbeheizter 1-l-Mehrhalskolben mit Rührer, einem Tropftrichter, Wasserkühler, Trockeneiskuhler (Trockeneis in Isopropanol. ca. -40 °C eingestellt). Die Apparatur ist mit Stickstoff zu überlagern.

Apparatur B:

Ein doppelwandiger, ölbeheizter 1-l-Mehrhalskolben mit Rührer, einem Tropftrichter, einer 50-cm-Füllkörperkolonne, Kolonnenkopf mit Rücklauteiler und Destillationsvorlage, Wasserkühler, Trockeneiskühler (Trockeneis in Isopropanol, ca. -40 °C eingestellt). Die Apparatur ist einerseits mit Stickstoff zu überlagern, andererseits verfügt sie über eine Vakuumeinheit mit vorgeschalteter, trockeneisgekühlter Kühlfalle.

Erster Ansatz einer Serie:

In Apparatur B werden 471 g (4,62 mol) Essigsäureanhydrid vorgelegt und unter Rühren auf 90 °C erwärmt (Heizbad 120 °C) Hier hinein dosiert man innerhalb von 4 Stunden 210 g (1,19 mol) Propyltrichlorsilan. Das aus der Reaktion dieser beiden Stoffe frei werdende Acetylchlorid wird schon während der Dosierung bei Normaldruck abdestilliert (Abnahme: Rücklauf 2 : 1). Wenn nach Ende der Dosierung die Reaktion nachlässt, wird die Heiztemperatur auf etwa 100 °C zurückgenommen und der Anlagendruck abgesenkt.

Acetylchlorid destilliert weiter in die Vorlage (Abnahme: Rücklauf 2 : 1). Ab ca. 250 mbar wird die Abnahme geschlossen und die Reaktionsmischung etwa 2 Stunden weiter am Rückfluss gekocht. Die Kopftemperatur sinkt zunächst bis knapp unter die Kühlwassertemperatur. In dieser Phase kochen Acetylchlorid-Reste durch Wasser- und Tiefkühler und sammeln sich in der Kühlfalle. Gegen Ende der angegebenen Zeit steigen Kopf- und Sumpftemperatur auf ein konstantes Niveau an. Man beginnt jetzt, bei etwa 50 mbar das überschüssige Essigsäureanhydrid abzudestillieren. Am Ende dieser Phase zieht man den Anlagendruck auf < 3 mbar herab.

Man erhält folgende Fraktionen:

| | |
|---|---|
| Produkt: | 290 g Propyltriacetoxysilan mit < 1 % Leichtsiedern und < 1 % Hochsiedern |
| Acetylchlorid: | 241 ml = 265 g aus Destillationsvorlage und Kühlfalle mit < 2 % Essigsäureanhydrid |
| Essigsäureanhydrid: | 145 g mit < 1 % Acetylchlorid |

In Apparatur A werden die 265 g (3,38 mol) Acetylchlorid vorgelegt. Die Heiztemperatur ist auf 60 °C eingestellt. Man dosiert innerhalb von 4 Stunden 34,9 g (1,94 mol) Wasser hinzu. Die freigesetzte HCl wird abgeführt. Nach der Zugabe wird noch 30 Minuten nachgeheizt. Man wiegt 225 g Acetylchlorid/Essigsäure-Gemisch aus (51 % Essigsäure).

Zweiter und weitere Ansätze einer Serie:

1. Reaktionsstufe:

Das am Ende des vorangegangenen Ansatzes in Apparatur A erhaltene Acetylchlorid/Essigsäure-Gemisch, enthaltend etwa 16 g (1,93 mol) Essigsäure, wird mit 3 Tropfen Dimethylformamid versetzt und in der Apparatur A bis zum Siedepunkt des Acetylchlorids erhitzt. Innerhalb von 4 Stunden dosiert man 240 g (1,35 mol) Propyltrichlorsilan zu. Die dabei frei werdende HCl wird abgeführt. Nach der Zugabe wird noch etwa 4 Stunden bis zur Konstanz der Sumpftemperatur ausgekocht. Die gaschromatographische Untersuchung der Reaktionsmischung weist die Anwesenheit aller möglicher Reaktionsprodukte zwischen Propyltrichlorsilan und Essigsäure aus. Essigsäure ist zu < 0,5 % und Oligomere sind zu < 1 % enthalten.

2. Reaktionsstufe:

In Apparatur B ist inzwischen das aus dem vorhergehenden Ansatz rückgewonnene Essigsäureanhydrid vorgelegt worden (rd. 145 g). Hinzu kommen 212 g frisches Essigsäureanhydrid. Beides zusammen (insgesamt 3,5 mol Essigsäureanhydrid) wird, wie eingangs beim ersten Ansatz beschrieben, aufgeheizt. Bei 90 °C Sumpftemperatur beginnt man mit dem Zudosieren der obenbeschriebenen Reaktionsmischung aus der 1. Stufe. Dosierbedingungen und Destillationszeiten entsprechen den Angaben wie eingangs für den ersten Ansatz ausgeführt

Man erhält folgende Fraktionen:

Produkt: 332 g Propyltriacetoxysilan mit < 1 % Leichtsiedern und < 2 % Hochsiedern

Acetylchlorid: 241 ml = 265 g aus Destillationsvorlage und Kühlfalle mit < 2 % Essigsäureanhydrid

Essigsäureanhydrid: 145 g mit < 1 % Acetylchlorid

Anschließend erfolgt die partielle Hydrolyse des dabei erhaltenen Acetylchlorids - wie bereits oben für den ersten Ansatz der Serie beschrieben -, womit ein Cyclus abgeschlossen ist.

**Beispiel 2**

**Herstellung eines 2:1-Gemischs aus Ethyl- und Methyltriacetoxysilan**

In Apparatur A sind 240 ml Acetylchlorid aus einem vorhergehenden Ansatz mit 34,2 g (1,90 mol) Wasser teilhydrolysiert worden.

1. Reaktionsstufe:

Zu der erhaltenen Acetylchlorid/Essigsäure-Mischung fügt man 3 Tropfen Dimethylformamid hinzu, dosiert zunächst 139,7 g (0,854 mol) Ethyltrichlorsilan, wie in Beispiel 1 beschrieben, zu und führt den entstehenden Chlorwasserstoff ab. Nach Ende der Dosierung wird etwa 1 Stunde ausgeheizt.
Zwischenzeitlich lädt man den Tropftrichter neu mit 68,0 g (0,455 mol) Methyltrichlorsilan, die im Anschluss an die Ausheizphase in die Reaktionsmischung eindosiert werden. Man heizt die Reaktionsmischung noch bis zu ihrer Temperaturkonstanz aus und überführt sie dann in den Tropftrichter der Apparatur B.

2. Reaktionsstufe:

Hier sind 345 g (3,38 mol) Essigsäureanhydrid vorgelegt. Wie in Beispiel 1 beschrieben, wird in dieser Stufe des Verfahrens die Reaktionsmischung aus der Stufe 1 eindosiert. Man destilliert alles Acetylchlorid und den Essigsäureanhydrid-Überschuss ab und erhält als Produkt den Rückstand dieser Destillation.
Man erhält folgende Fraktionen:

Produkt: 298 g Acetoxysilan-Gemisch (67 % Ethyltricetoxysilan, 33 % Methyltriacetoxysilan) mit < 1 % Leichtsiedern, < 1 % Hochsiedern und < 10 ppm hydrolysierbarem Chlorid

Acetylchlorid: 241 ml = 265 g aus Destillationsvorlage und Kühlfalle mit < 2 % Essigsäureanhydrid

Essigsäureanhydrid: 138 g mit < 1 % Acetylchlorid

**Patentansprüche**

1. Verfahren zur Herstellung von Acetoxysilanen durch Umsetzung von Chlorsilanen mit Essigsäure und Essigsäureanhydrid in Gegenwart eines Katalysators, wobei man in einer Reaktionsstufe 1 das Chlorsilan mit Essigsäure umsetzt, den entstandenen Anteil an Chlorwasserstoff abführt, das so erhaltene Reaktionsgemisch aus der Reaktionsstufe 1 in einer Reaktionsstufe 2 mit Essigsäureanhydrid umsetzt und das resultierende Produktgemisch aufarbeitet,
dadurch gekennzeichnet,
dass man Acetylchlorid als Reaktionsmedium einsetzt.

2. Verfahren nach Anspruch 1,
dadurch gekennzeichnet,
dass man in der Reaktionsstufe 1 das Chlorsilan einer Mischung aus Essigsäure und Acetylchlorid zugibt.

3. Verfahren nach Anspruch 1 oder 2,
dadurch gekennzeichnet,
dass man die Umsetzung in der Reaktionsstufe 1 bei Siedetemperatur der vorliegenden Reaktionsmischung durchführt.

4. Verfahren nach mindestens einem der Ansprüche 1 bis 3,
dadurch gekennzeichnet,
dass man die Umsetzung in der Reaktionsstufe 1 bei einem Druck von 900 bis 1 100 mbar abs. durchführt.

5. Verfahren nach mindestens einem der Ansprüche 1 bis 4,
dadurch gekennzeichnet,
dass man in der Reaktionsstufe 1 Essigsäure in der Menge einsetzt, die erforderlich ist, um im Mittel 50 Mol-% des im Chlorsilan gebundenen Chlors umzusetzen.

6. Verfahren nach mindestens einem der Ansprüche 1 bis 5,
dadurch gekennzeichnet,
dass man in der Reaktionsstufe 2 Essigsäureanhydrid vorlegt, das Reaktionsgemisch aus Reaktionsstufe 1 zugibt, sich bildendes Acetylchlorid und gegebenenfalls anschließend überschüssiges Essigsäureanhydrid abdestilliert.

7. Verfahren nach mindestens einem der Ansprüche 1 bis 6,
dadurch gekennzeichnet,

dass man die Umsetzung in der Reaktionsstufe 2 bei Siedetemperatur der vorliegenden Reaktionsmischung durchführt.

**8.** Verfahren nach mindestens einem der Ansprüche 1 bis 7,
dadurch gekennzeichnet,
dass man die Umsetzung in der Reaktionsstufe 2 bei einem Druck im Bereich zwischen 1 bar abs. bis 1 mbar abs. durchführt.

**9.** Verfahren nach mindestens einem der Ansprüche 1 bis 8,
dadurch gekennzeichnet,
dass man in der Reaktionsstufe 2 Essigsäureanhydrid mindestens in der Menge einsetzt, die erforderlich ist, um das im Acetoxychlorsilan des Reaktionsgemischs aus der Reaktionsstufe 1 gebundene Chlor in Acetylchlorid zu überführen.

**10.** Verfahren nach Anspruch 9,
dadurch gekennzeichnet,
man Essigsäureanhydrid mit einem Überschuss bis 300 Gew.-%, bezogen auf die eingesetzte Menge an Chlorsilan, einsetzt.

**11.** Verfahren nach mindestens einem der Ansprüche 1 bis 10,
dadurch gekennzeichnet,
dass man dem durch Abtrennen in der Reaktionsstufe 2 erhaltenen Acetylchlorid gezielt Wasser zugibt und zu einem Gemisch aus Acetylchlorid und Essigsäure umsetzt.

**12.** Verfahren nach Anspruch 11,
dadurch gekennzeichnet,
dass man die so erhaltene Mischung aus Acetylchlorid und Essigsäure in Reaktionsstufe 1 einsetzt.

**13.** Verfahren nach Anspruch 11 oder 12,
dadurch gekennzeichnet,
dass man das durch Abtrennen in der Reaktionsstufe 2 erhaltene Acetylchlorid mit der Menge an Wasser zusammenbringt, die notwendig ist, um Essigsäure in einer Menge zu erzeugen, welche erforderlich ist, um im Mittel 50 Mol-% des im Chlorsilan gebundenen Chlors in Reaktionsstufe 1 umzusetzen.

**14.** Verfahren nach Anspruch 13,
dadurch gekennzeichnet,
dass man Verluste an Acetylchlorid durch Variation der Wassermenge ausgleicht.

**15.** Verfahren nach mindestens einem der Ansprüche 1 bis 14,
dadurch gekennzeichnet,

dass man als Katalysator ein organisches Säureamid einsetzt.

**16.** Verfahren nach Anspruch 15,
dadurch gekennzeichnet,
dass man als Katalysator N,N-Dimethylformamid einsetzt.

**17.** Verfahren nach mindestens einem der Ansprüche 1 bis 16,
dadurch gekennzeichnet,
dass man 0,001 bis 0,2 Gew.-% Katalysator, bezogen auf die Menge an Chlorsilan, in der Reaktionsstufe 1 einsetzt.

**18.** Verfahren nach mindestens einem der Ansprüche 1 bis 17,
dadurch gekennzeichnet,
dass man in der Reaktionsstufe 1 mindestens ein Chlorsilan der allgemeinen Formel I

$$R_nSiCl_{(4-n)} \qquad\qquad (I),$$

wobei R für eine lineare, verzweigte oder cyclische Alkylgruppe mit 1 bis 6 Kohlenstoffatomen oder eine Vinyl- oder Phenyl- oder Benzyl-Gruppe steht und n gleich 0, 1, 2 oder 3 ist, oder Dimethyldichlorsilan oder 2-Chlorethylmethyldichlorsilan einsetzt.

**19.** Verfahren nach Anspruch 18,
dadurch gekennzeichnet,
dass man in der Reaktionsstufe 1 zwei verschiedene oder mehr als zwei Chlorsilane der allgemeinen Formel (I) einsetzt.

**20.** Verfahren nach Anspruch 18 oder 19,
dadurch gekennzeichnet,
dass man in der Reaktionsstufe 1 Chlorsilane als Einzelkomponenten nacheinander oder in Form ihrer Mischung einsetzt.

**21.** Verfahren nach Anspruch 20,
dadurch gekennzeichnet,
dass man die Reihenfolge der Zugabe mehrerer Chlorsilane nach steigender Reaktivität ausführt.

**22.** Verfahren gemäß den Ansprüchen 1 bis 4, 6 bis 12 und 14 bis 18 zur Herstellung von Di-tert.-butoxydiacetoxysilan,
dadurch gekennzeichnet,
dass man in der Reaktionsstufe 1 Essigsäure in der Menge einsetzt, die erforderlich ist, um im Mittel 75 % des im Chlorsilan gebundenen Chlors umzusetzen.

**23.** Verfahren nach Anspruch 22,
dadurch gekennzeichnet,

dass man das durch Abtrennen in der Reaktionsstufe 2 erhaltene Acetylchlorid mit der Menge Wasser zusammenbringt, die notwendig ist, um Essigsäure in einer Menge zu erzeugen, welche erforderlich ist, um im Mittel 25 Mol-% des im Chlorsilan gebundenen Chlors in Reaktionsstufe 1 umzusetzen.

24. Verfahren nach Anspruch 22 oder 23,
   dadurch gekennzeichnet,
   dass man die bei der Umsetzung des aus Reaktionsstufe 2 stammenden Tetraacetoxysilans mit tert.-Butanol erhaltene Essigsäure zumindest anteilig in Reaktionsstufe 1 einsetzt.